# EUROPEAN PATENT APPLICATION

(11) **EP 4 649 817 A1**
(43) Date of publication of application: **19.11.2025**
(21) Application number: 25177114.3
(22) Date of filing: 16.05.2025
(51) Int. Cl.: A01F 29/09, A01D 43/08, A01F 29/06

(54) **AN ADJUSTMENT TOOL FOR ADJUSTING THE CHOPPER KNIVES OF A FORAGE HARVESTER**

(30) Priority: 17.05.2024 GB 202407060
(71) Applicant: AGCO International GmbH, 8212 Neuhausen am Rheinfall (CH)
(72) Inventor: Albrecht, Christoph, Marktoberdorf (DE); Prestele, Clemens, Marktoberdorf (DE)
(74) Representative: AGCO Intellectual Property Department

(57) **Abstract**

An adjustment tool (80) is provided for adjusting the chopping knives (61) of a chopper drum of a forage harvester. A frame (82) is provided with a pair of fixings (84) for engaging with a bore (50) through the chopper knife (61). Edge alignment pins (86) project from the frame (82) for engaging with non-wearing edges (64, 66) of a chopper knife (61), thereby setting a position of non-wearing edges (64, 66) of the chopper knife (61) relative to the bores (50). The edge alignment pins (86) are positioned for alignment of a chopper knife (61) with a predetermined amount of wear.

## Description

### FIELD

Embodiments of the present disclosure relate generally to forage harvesters, and in particular to maintenance of the cutting drum of a forage harvester.

### BACKGROUND

A forage harvester is designed to harvest and process forage crops such as corn, grass, and other similar crops for silage.

A forage harvester typically includes a header at the front of the forage harvester that gathers the crop from the field. Headers come in various types depending on the crop being harvested, such as corn headers, pickup headers for grass and small grains, or wide swath headers.

A cutter head is used to cut the crop as it is fed into the machine. It can have various configurations, such as rotary blades or flail-type knives, depending on the type of crop and the desired cut length.

A crop processor is typically used for further processing the harvested crop, for example with mechanisms for crushing, cracking, or shredding the crop to enhance its digestibility and nutritional value for livestock feed.

A crop conveyance system is used to transport the harvested crop from the cutting and processing components to the collection or distribution system of the harvester. It comprises augers, belts, and other mechanisms. An accelerator is used to assist in feeding the crop through the machine. It helps in breaking down the crop material and ensuring a consistent flow of material through the harvester.

The cutter head typically comprises a rotatable chopper drum having a plurality of knives, in use the chopper drum rotating opposite a stationary shear bar. There is a gap between the shear bar and the knives into which crop is fed during harvesting, the fed crop then being chopped between the chopper knives and the shear bar. Such harvesting machines require regular maintenance of the chopper drum assembly and the shear bar in order to maintain the quality of the chopping process.

The chopping of incoming crop causes wear on the chopper knives and on the shear bar of the chopping assembly. This action may also cause the shear bar to become incorrectly adjusted. If chopping is performed using blunt knives and/or with a shear bar that is incorrectly adjusted this leads to a reduction in the chopping quality and increased energy consumption in driving of the chopper drum assembly.

It is therefore necessary at periodic intervals to perform maintenance actions on the chopper drum assembly, for example to adjust partially worn chopper knives, replace blunt knives and/or to adjust the shear bar in order to obtain a suitable cutting gap.

This disclosure relates in particular the adjustment or replacement of chopper knives. This can be a time-consuming operation, and hence there is a need for solutions to simplify the task of chopper knife adjustment.

The present invention has as an advantage that it addresses the above problems. Other advantages will become clear from the following description.

### BRIEF SUMMARY

The scope of this disclosure is defined by the claims.

According to examples in accordance with this disclosure, there is provided an adjustment tool for adjusting the chopping knives of a chopper drum of a forage harvester, the chopper knives being attached to a support which is coupled to the chopper drum, comprising:
a frame;
a pair of fixings, each fixing of the pair configured to engage with a bore extending in a chopper knife support;
a set of edge alignment pins projecting from the frame for engaging with one or more non-wearing edges of a chopper knife, thereby setting a position of the one or more non-wearing edges of the chopper knife relative to the bores,
wherein the edge alignment pins are positioned for alignment of a chopper knife (61) with a predetermined amount of wear.

This adjustment tool enables the position of a chopper knife to be adjusted in a simple and efficient manner. It is fitted to the support of the chopper knife, through bores in the chopper knife. The bores in the support are for example chamfered to enable simple alignment. The knife connection bolts are loosened (if they have not been removed to fit the adjustment tool) so that the position of the chopper knife can be adjusted, and it is simply moved to butt against the alignment pins (which are positioned for the judged state of wear of the chopper knife).

The position setting is simpler for the worker so that the assembly quality does not depend on the skill of the worker. The knives can be adjusted without needing to make any reference to the counter bar / shear bar, for example without adjusting the knives along the counter bar / shear bar. This prevents any damage to the counter bar / shear bar during chopper knife adjustment and reduces any risk of injury.

The set of edge alignment pins for example comprises a set of three pins, two for engaging with a back edge of the chopper knife opposite a cutting edge of the chopper knife and one for engaging with a side edge of the chopper knife.

The three edge alignment pins enable the forward-backward position as well as the lateral position of the chopper knife to be set.

The set of edge alignment pins, and the blots, are for example selectively attachable to either opposing face of the frame, such that the adjustment tool is configurable for left or right side operation. In this way, a single tool is needed for both lateral sides of a chopping drum with a pair of rings of chopper knives.

A handle is for example mounted on the frame. This facilitates application and removal of the tool. The handle is also selectively attachable to either opposing face of the frame, again such that the adjustment tool is configurable for left or right side operation.

The fixings extend from one face of the frame, and manual knobs for the fixings extend from the opposite face of the frame. These manual knobs may be used to ensure correct alignment of the adjustment tool relative to the chopper knife support.

One or both fixings may comprise a central shaft configured to engage with the bore in the chopper knife support and an outer sleeve that carries the frame, wherein the outer sleeve is axially slidable along the central shaft. In this way, the fixings can be tightened while the frame remains static. This prevents canting of the frame so that the fixings can be connected and disconnected without misalignment. The outer sleeve is for example axially slidable along the central shaft by a distance corresponding to an amount of movement of the central shaft when tightening the fixing.

The set of edge alignment pins for example has at least two positions in which the edge alignment pins can be mounted, each associated with a different predetermined amount of wear. Thus, a single tool can be reconfigured for positioning chopper knives with at least two different amounts of wear.

The set of edge alignment pins for example has a first position associated with a new knife and a second position associated with a 50% worn knife. The set of edge alignment pins may instead have a first position associated with a 25% worn knife and a second position associated with a 75% worn knife. Thus, two adjustment tools between them can be used to position chopper knives with four different amounts of wear.

The disclosure thus also provides a set of adjustment tools, comprising:
a first tool as defined above for new and 50% wear; and
a second tool as defined above for 25% wear and 75% wear.

Of course they may be a different number of wear positions, and they may be more than two different wear amounts that can be configured by a single tool.

The disclosure also provides a cutting system of forage harvester, comprising:
a stationary shear bar;
a cutting drum comprising an array of chopper knife assemblies for rotation past the shear bar, wherein each chopper knife assembly comprises:
a set of chopper knife bolts;
a support extending from the cutting drum;
a back plate having a set of bores for receiving the chopper knife bolts;
a front plate; and
a chopper knife,
wherein the chopper knife is clamped with the support between the back plate and the front plate by the set of chopper knife bolts, wherein the back plate, front plate and support have circular openings for receiving the chopper knife bolts and the chopper knife has a set of openings for the chopper knife bolts, to allow positioning of the chopper knife relative to the support, back plate and front plate; and
a tool as defined above for mounting over the front plate using the fixings.

The cutting drum for example comprises a first array of chopper knives to one lateral side and a second array of chopper knives to a second lateral side.

The bores in the support are for example chamfered.

This disclosure also provides a forage harvester comprising:
a header;
the cutting system defined above;
an accelerator for generating a flow of the cut crop material; and
a delivery spout for receiving and conveying the cut crop material.

This disclosure also provides a method of adjusting a chopper knife of a chopper drum of a forage harvester, comprising:
fixing an adjustment tool over the chopper knife using a pair of fixings configured to engage with the bores of a chopper knife support through the chopper knife;
loosening chopper knife bolts of the chopper knife to the support;
adjusting the chopper knife position such that one or more non-wearing edges butt against a set of edge alignment pins of the adjustment tool, thereby setting a position of the one ore more non-wearing edges of the chopper knife relative to the bores;
tightening the loosened chopper knife bolts; and
removing the adjustment tool,
wherein the edge alignment pins are positioned for alignment of a chopper knife with a predetermined amount of wear.

In one example, the method comprises removing a pair of chopper knife bolts of the chopper knife to the support, and fixing an adjustment tool over the chopper knife comprising engaging the pair of fixings with the bores exposed by the removed chopper knife bolts. After the adjustment tool is removed, the removed pair of chopper knife bolts are replaced.

### BRIEF DESCRIPTION OF THE DRAWINGS

One or more embodiments of this disclosure will now be described, by way of example only, with reference to the accompanying drawings, in which:
FIG. 1 shows a schematic side view of a forage harvester;
FIG. 2 shows an example of a chopping drum, without the chopper knives;
FIG. 3 shows a knife support in more detail;
FIG 4 shows a part of a chopping drum with attached chopper knives as well as showing an adjustment tool;
FIG. 5 shows the adjustment tool more clearly;
FIG. 6 shows the adjustment tool fitted over a chopper knife;
FIG. 7 shows a cross section of an attached adjustment tool;
FIG. 8 shows a set of two adjustment tools;
FIG. 9 shows a single adjustment tool that has been configured for right side and left side operation;
FIG. 10 shows a part of a chopping drum with attached chopper knives as well as showing a modified adjustment tool;
FIG. 11 shows the modified adjustment tool more clearly;
FIG. 12 shows the modified adjustment tool fitted over a chopper knife in a loose state, in cross section; and
FIG. 13 shows the modified adjustment tool fitted over a chopper knife in a tightened state, in cross section.

### DETAILED DESCRIPTION

The subject matter of this disclosure will be described with reference to the Figures.

It should be understood that the detailed description and specific examples, while indicating exemplary embodiments of the apparatus, systems and methods, are intended for purposes of illustration only and are not intended to limit the scope of the disclosure. These and other features, aspects, and advantages of the apparatus, systems and methods of the present disclosure will become better understood from the following description, appended claims, and accompanying drawings. It should be understood that the Figures are merely schematic and are not drawn to scale. It should also be understood that the same reference numerals are used throughout the Figures to indicate the same or similar parts.

This disclosure provides an adjustment tool for adjusting the chopping knives of a chopper drum of a forage harvester. A frame is provided with a pair of fixings for engaging with a bore through the chopper knife. Edge alignment pins project from the frame for engaging with non-wearing edges of a chopper knife, thereby setting a position of non-wearing edges of the chopper knife relative to the bores. The edge alignment pins are positioned for alignment of a chopper knife with a predetermined amount of wear.

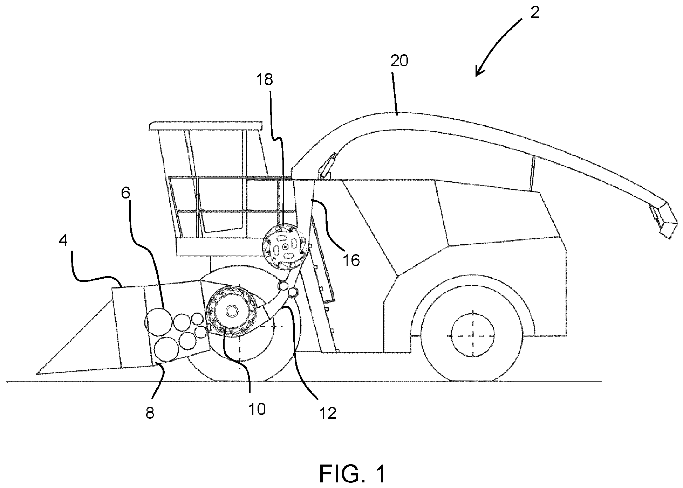

With reference to FIG. 1, in a schematic side view the main components of a forage harvester 2 are shown. The forage harvester 2 is provided with a front attachment 4 which contains cutting equipment for cutting a crop. The cut crop is then fed through a series of compression rollers 6 in a compression roller housing 8 to a chopper drum 10 where the crop is chopped into smaller pieces between a shear bar and a plurality of chopper knives mounted on the chopper drum 10. The chopped crop is then blown upwards along a second duct 16 by an accelerator 18 and exits through a spout 20.

A cracker unit (not shown) may optionally also be provided where the crop is further crushed and threshed. A cracker unit is for example provided between the chopper drum 10 and the accelerator 18.

Over time, chopping of the incoming crop causes wear on the chopper knives (and on the shear bar). While it is known to provide knife sharpening apparatus within such forage harvesters, which is operated from time to time to maintain the sharpness of the chopper knifes, it remains the case that after repeated sharpening, the chopper knives wear away and the chopper knives need to be adjusted or eventually replaced.

It is therefore necessary over time as part of the ongoing maintenance of the chopper drum to perform a number of tasks including i) replacing worn, blunt knife blares with new chopper knives in a suitable position to ensure correct interaction in use with the shear bar; ii) where chopper knives may be adjusted rather than replaced, adjusting the position of the chopper knives relative to the shear bar to ensure correct interaction between each chopper knife and the shear bar.

The shear bar also may need adjustment in order to obtain or maintain a suitable cutting gap.

This disclosure relates particularly to the adjustment or replacement of the chopper knives.

During maintenance, the chopper knives need to be located in the correct position in relation to a correctly adjusted shear bar to result in proper operation of the chopping drum - both for chopping of crop and to guarantee that the chopper knives are in the correct position to be sharpened by the knife sharpening apparatus.

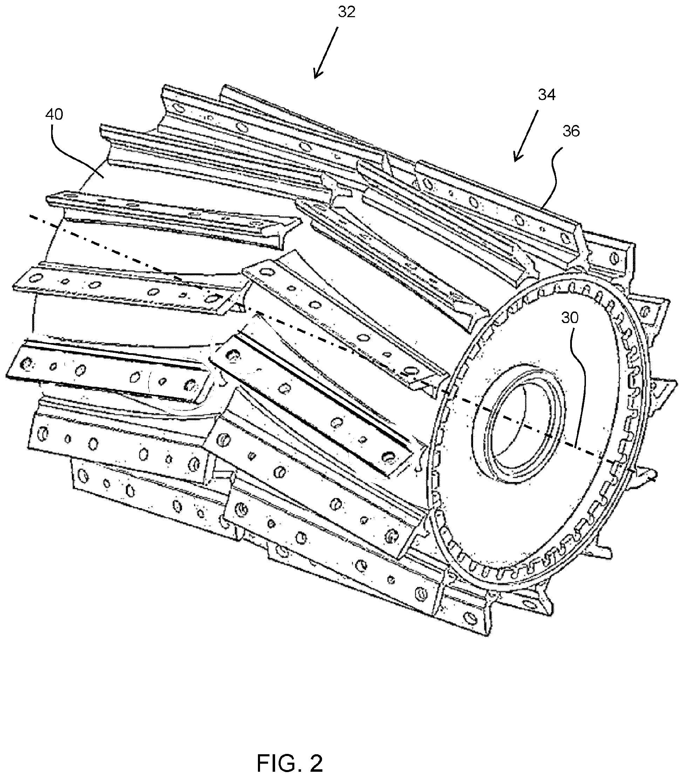

FIG. 2 shows an example of the chopping drum, without the chopper knives attached. The chopping drum rotates about an axis 30. In the example shown, there are two annular sets 32, 34 of chopper knife supports 36. The two sets are positioned side by side along the rotation axis 30. The chopper knives are mounted to the supports 36 (as shown further below). The supports 36 extend from a central hub 40 of the chopper drum, The supports, and hence the chopper knives, are slanted with respect to the rotation axis 30 so that they perform a shearing function as the chopper knives pass the shear bar. The two sets 32,34 are oriented oppositely so that the shearing is towards the center in this example. Thus, the chopper knives have mirror image orientations.

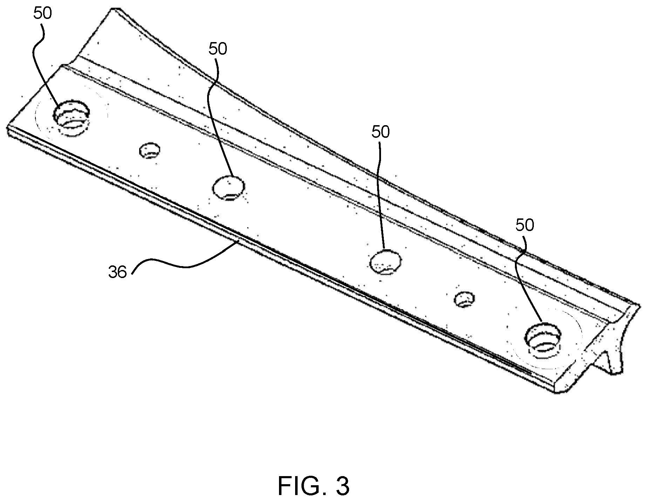

FIG. 3 shows a support 36 in more detail. It has a set of four (in this example) bores 50. These are for receiving bolts that are used to fasten the chopper knives to the support 36. The bores 50 have a chamfered entrance portion so that it is easier to align the chopper knife bolts with the bores when fitting a chopper knife. As explained below, this chamfered entrance portion is used as a reference for an adjustment tool. Thus, it is a functional surface for the adjustment tool.

The bores of the support may be threaded so that the chopper knife bolts attach to the bores. However, in the example shown, the bores are not threaded, and the chopper knife bolts attach to a backing plate.

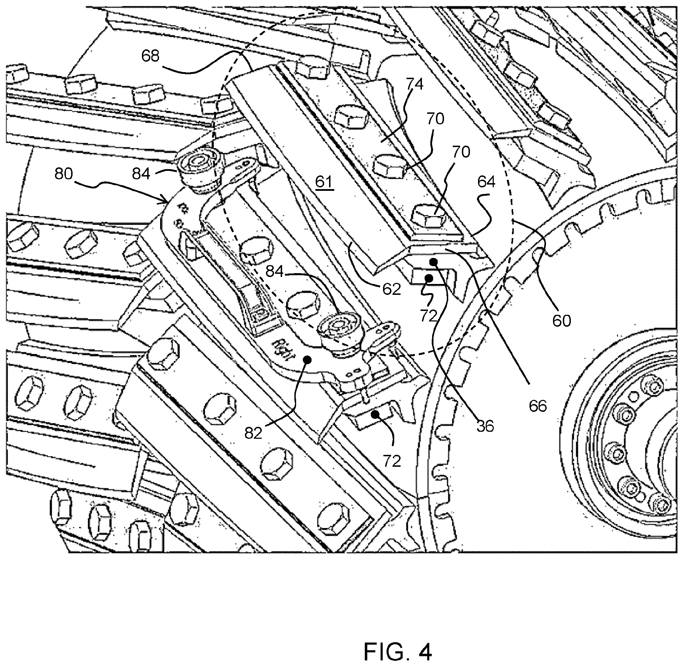

FIG 4 shows the chopping drum with the attached chopper knives 61 as well as showing the adjustment tool.

Each chopper knife 61 has an outward facing edge 62 which is the cutting edge and is the edge that is prone to wearing. The chopper knives also have an inward facing edge 64, a lateral outer edge 66 and a lateral inner edge 68, where the lateral direction is the direction along the axis 30.

The chopper knives have an adjustable position relative to their support 36, hence an adjustable position relative to the central hub. In particular, the chopper knives can be moved towards outwardly (i.e. advancing the cutting edge) or inwardly (i.e. retracting the cutting edge). However, they can also be adjusted in position laterally, by a smaller amount, for example 1mm to 2mm.

The chopper knives 61 are attached by four bolts 70. In the example shown, the bolts are received in threaded bores of a backing plate 72 and there is a top plate 74. Thus, the bolts 70 clamp the chopper knife 61 to the support 36, by clamping them both between the top plate 74 and the backing plate 72. The top plate for example has a pre-bend so that once it is bolted down it resists the bolts becoming loosened. The top plate 74 may however be omitted and the bolts may directly act on the chopper knife.

The overall stack of top plate 74, backing plate 72, chopper knife 61, support 36 and bolts 70 may be considered to constitute a chopper knife assembly 60.

FIG. 4 also shows an adjustment tool 80. It is fitted over a chopper knife 61 that is being adjusted. In the example shown, the two outer bolts 70 have been removed so that the adjustment tool is received using those exposed bolt holes, and the two inner bolts have been loosened. However, in another example, there may be additional bores for the adjustment tool and none of the bolts needs to be removed to perform a position adjustment. Of course, all bolts will need to be removed to fit a new chopper knife.

The holes of the chopper knife through which the bolts pass are larger than the shafts of the bolts, to allow position adjustment. They may be larger circular openings, or they may be shaped to allow more adjustment in the inward-outward direction than the lateral direction. For example, they may be oval, with the long oval axis in the forward-rearward direction and the short oval axis in the lateral direction, hence giving different amounts of adjustability in the different directions.

The adjustment tool 80 comprises a frame 82 and a pair of fixings 84, each fixing 84 of the pair being configured, in the particular example shown, to engage with a bore exposed by a removed chopper knife bolt 70.

The fixing 84 may comprise a shaft with a taper to engage with the chamfer of the bore in the support 36. In this way, accurate alignment is provided between the adjustment tool and the support 36. The fixings 84 may additionally have a threaded end for threading into the bore of the backing plate 72. The remaining two bolts 70 in any case maintain the alignment between the top plate, the backing plate and the support.

The chopper knife 61 can be moved into a desired position before the middle bolts are re-tightened and the adjustment tool is removed.

To set the position of the chopper knife 61, the adjustment tool has a set of edge alignment pins projecting from the frame for engaging with one or more non-wearing edges of the chopper knife 61.

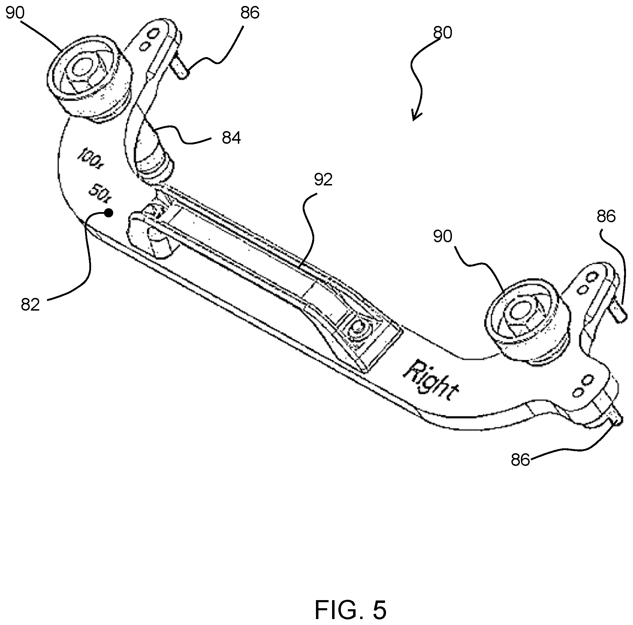

FIG. 5 shows the adjustment tool 80 more clearly, and shows the frame 82, the fixings 84 and the edge alignment pins 86. The edge alignment pins 86 and the fixings 84 project from one face of the frame 82, whereas tightening knobs 90 project from the opposing face of the frame. A handle 92 is also provided on the opposing face of the frame.

In this example, there are three edge alignment pins 86. Two are for positioning against the back face of the chopper knife, opposite the cutting edge, and one is for positioning against a side edge. The side edge pin ensures the two pins for the back edge are always positioned in the same position on the chopper knife. This leads to a precise position setting.

The example of FIG. 5 has two possible positions for the set of edge alignment pins 86. The two pins along the non-wearing back edge set the position of the back edge relative to the support 36. Thus, the two different positions for the pins set different amounts by which the cutting edge is advanced forward. For a more worn chopper knife, it is positioned in a more forwardly advanced position (i.e. moved towards the cutting edge). The chopper knife is not perfectly rectangular, so the edge alignment pin for the side edge also has a set of two different positions. For a rectangular chopper knife, the lateral pin would not need two positions. For a chopper knife without lateral adjustability, two edge alignment pins 86 along the back edge would suffice in which case the pins would engage only with one non-wearing edge.

The edge alignment pins are thus positioned for alignment of a knife with a predetermined amount of wear. The adjustment tool of FIG. 5 is configurable between two different states of wear, by moving the edge alignment pins 86 between the two possible positions.

To fit the adjustment tool, the fixings 84 have a tapered shaft which cooperates with the chamfer in the bore 50.

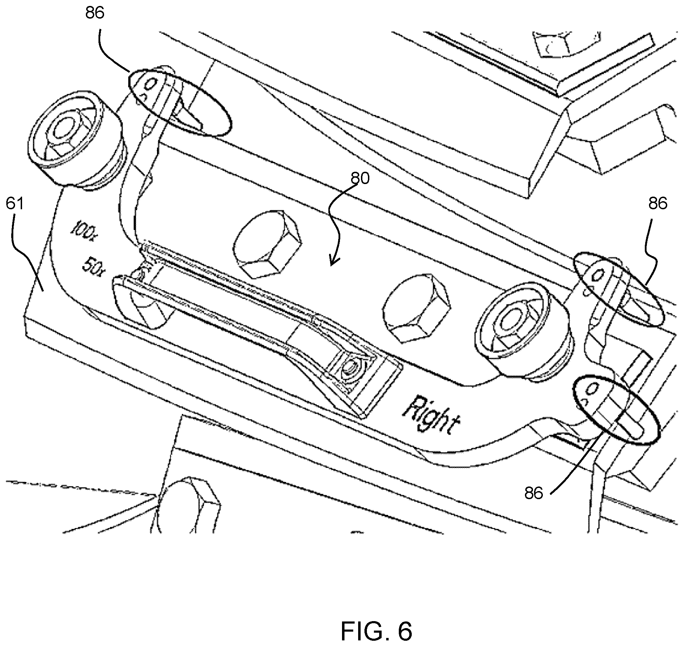

FIG. 6 shows the adjustment tool fitted over a chopper knife 61. It can be seen that the edge alignment pins 86 butt against two edges of the chopper knife 61, thereby setting the position of the chopper knife 61.

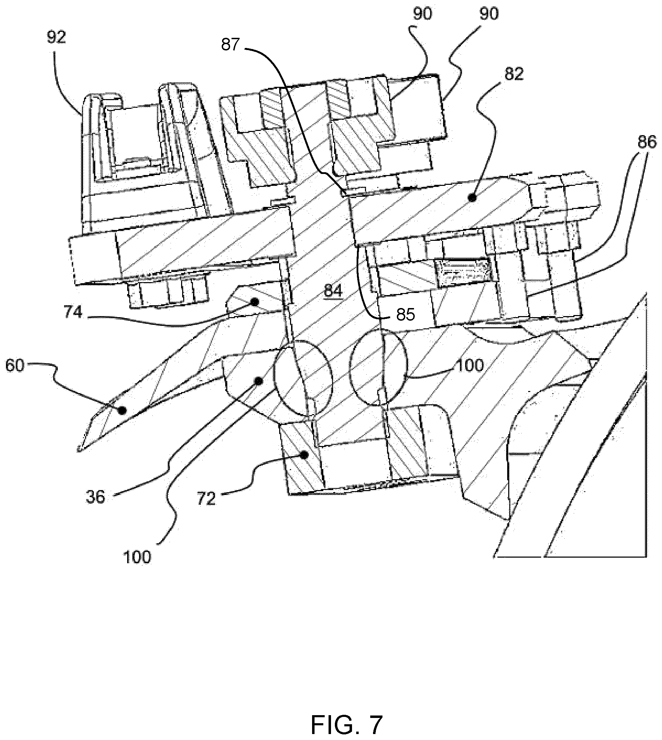

FIG. 7 shows a cross section of an attached adjustment tool, taken through the middle of one of the fixings 84. Region 100 is where the tapered shaft of the fixing 84 engages with the chamfered bore of the support 36. The fixing 84 is thus larger in diameter at its top end than at its bottom end (where it connects to the backplate 72) so that it can follow the shape of the chamfer. As a result, the holes in the top plate 74 that receive the fixings 84 need to be larger than the other holes (which are sized only to receive the bolts 70).

The frame 82 is located at a particular position along the fixing 84, sandwiched between a shoulder 85 along the fixing 84 and a fixing ring 87 such as a circlip. Thus, advancing the fixing 84 also advances the frame and the alignment pins 86 carried by the frame.

The fixings can be rotated by the adjustment knobs 90 to ensure engagement in the regions 100, thereby correctly setting the position of the adjustment tool relative to the bores 50.

Each fixing 84 has a threaded end and it is screwed to the threaded bore of the backing plate 72 to provide a more secure connection. However, in another example the adjustment tool is just a push fit into position.

The fixings provide alignment between all of the stacked components down to the backplate. The chopper knife positions are set by the edge alignment pins and all other component positions are set by the engagement between the fixings and the bores in those components.

The adjustment tool thus enables the position of a chopper knife to be adjusted in a simple and efficient manner. It is fitted to the support of the chopper knife through the chopper knife, either by removing a pair of bolts of the chopper knife (in the example above) or by fitting through openings specifically provided for the adjustment tool.

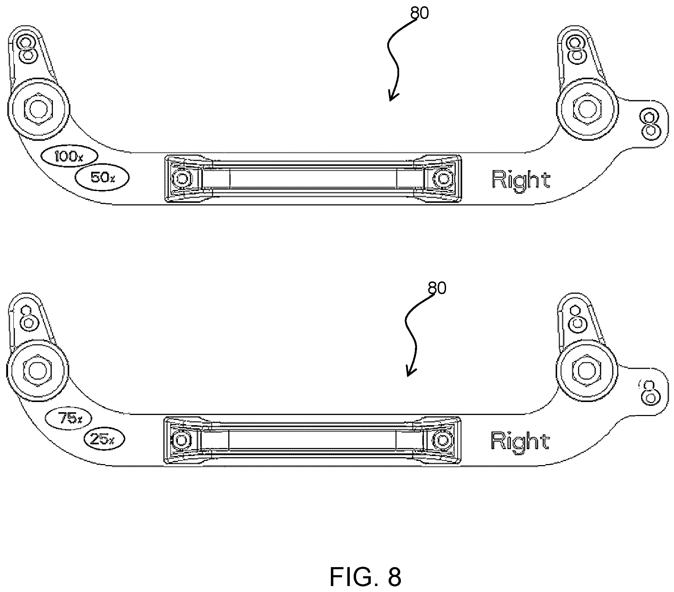

There may for example be a set of adjustment tools to cover a range of wear states. FIG. 8 for example shows a set of two adjustment tools. The top tool is for positioning a new chopper knife (100% remaining lifetime) or a chopper knife with 50% remaining lifetime. Thus, the two positions of the edge alignment pins are for 100% (new knife) or for 50% (half worn). The bottom tool is for positioning a chopper knife with 75% remaining lifetime or 25% remaining lifetime. Thus, the two adjustment tools together allow alignment of a new tool (100%) or tools that are 25%, 50% or 75% worn (i.e., with 75%, 50% or 25% remaining lifetime).

Two tools are used rather than one with four adjustment positions, so that the edge alignment pins have non-overlapping positions.

In another example, there is a separate tool for each wear condition. In another example, the edge alignment pins have continuously adjustable positions so that one tool can be set to any particular amount of wear.

The example of chopper drum shown above has two rings of chopper knives. Due to the symmetry of the chopper drum, the same tool can be used for both sides if the tool is flipped over. For this purpose, all of the components can be removed from the frame and attached to the opposite face. Thus, the edge alignment pins, the handle, and the fixings/adjustment knobs can be mounted on the opposite face of the frame.

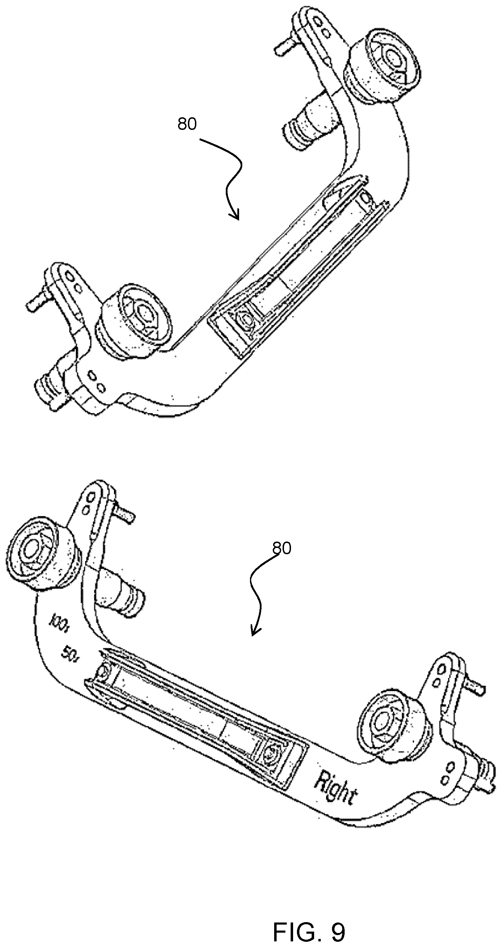

FIG. 9 shows a single adjustment tool that has been configured for right side and left side operation.

If the chopper knives are symmetrical, a single tool (without inversion) may also be able to be used for both sides. There may also be more than two rows of chopper knives.

The chopper knives can still be adjusted by hand (without using the tool). Thus, the tool design does not remove any of the known adjustment options.

In the design described above, tightening the fixings 84 advances the frame 82. It is preferable to maintain the frame parallel to the front plate 74 and support 36 when advancing the frame, so that the threaded shafts remain aligned with the threaded bores in the backplate. This can be achieved by tightening the two fixings in alternating manner, rather than fully tightening one fixing before starting to apply the other fixing. This latter approach could result in non-parallel alignment of the frame 82 and the knife support 36 so that the tapered regions 100 of the two fixings 84 may not engage simultaneously, or one fixing may become blocked due to non-alignment.

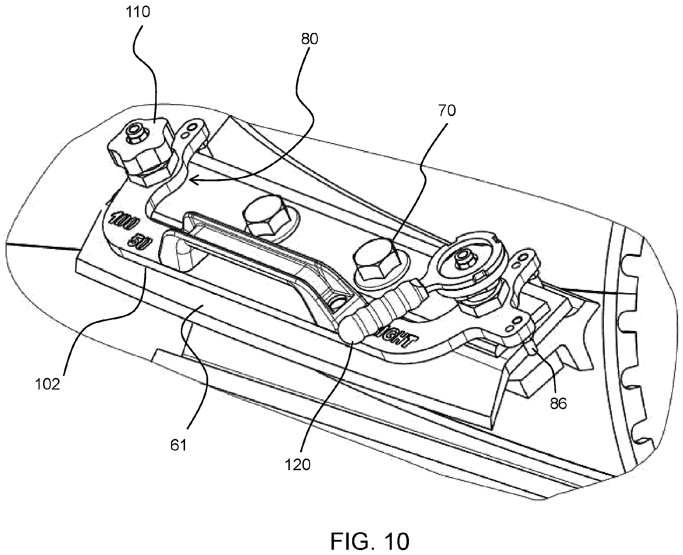

A modification to address this potential issue is explained with reference to FIG. 10 to FIG. 13.

FIG. 10 shows the modified adjustment tool 80 fitted over a chopper knife 61 that is being adjusted. In the example shown, the two outer bolts 70 have again been removed so that the adjustment tool 80 is received using those exposed bolt holes, and the two inner bolts have been loosened.

FIG. 10 shows that instead of having a bolt head for non-manual tightening of each fixing, a specially shaped head 110 is provided at the top of each fixing, and a tightening tool 120 is provided, so that the same head is used for manual as well as tool-based tightening.

The adjustment tool 80 functions in the same basic way as the example described above. It again comprises a frame 102 and a pair of fixings, each fixing configured to engage with a bore exposed by a removed chopper knife bolt 70. As in the example above, the chopper knife 61 can be moved into a desired position before the loosened middle bolts are re-tightened and the adjustment tool is removed.

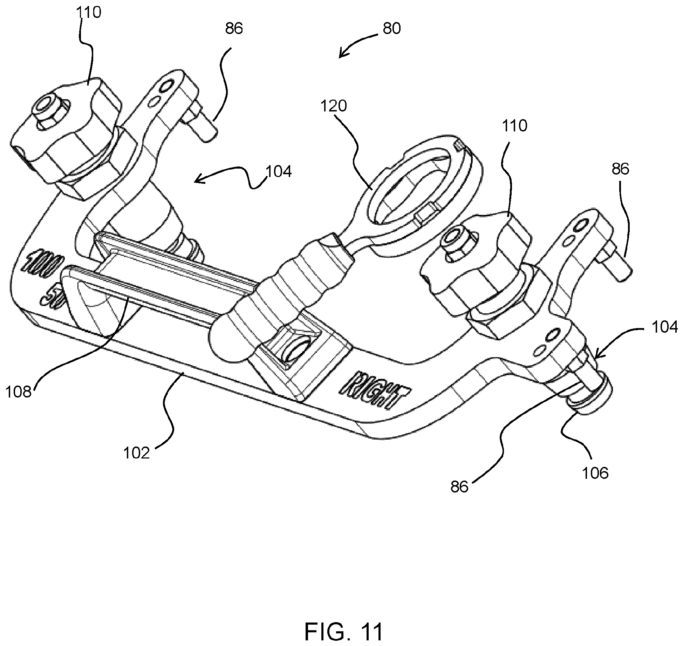

As shown more clearly in FIG. 11, the head 110 has a contoured outer surface. It may be gripped and turned by hand, and optionally also tightened using the tightening tool 120 which has an opening with a shape corresponding to the contoured shape of the head 110. FIG. 11 shows that the adjustment tool 80 again has edge alignment pins 86 that project from one face of the frame 102 and the heads 110 project from the opposing face of the frame 102. A handle 108 is again provided on the opposing face of the frame.

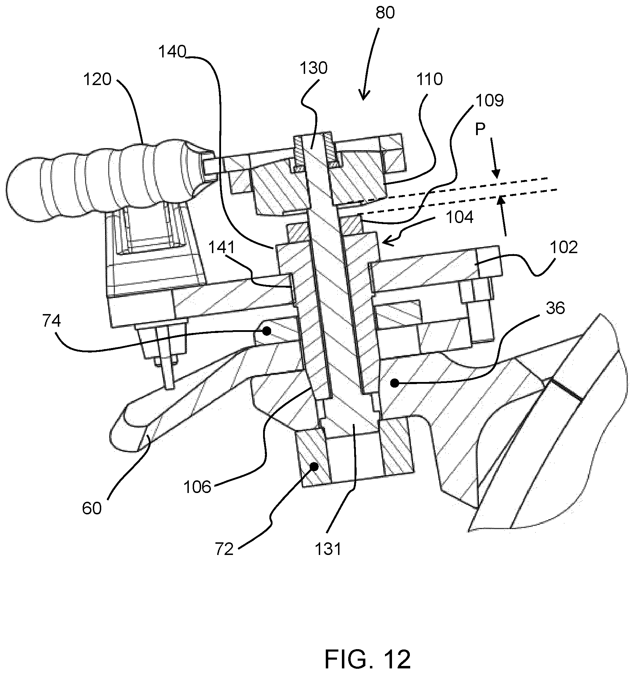

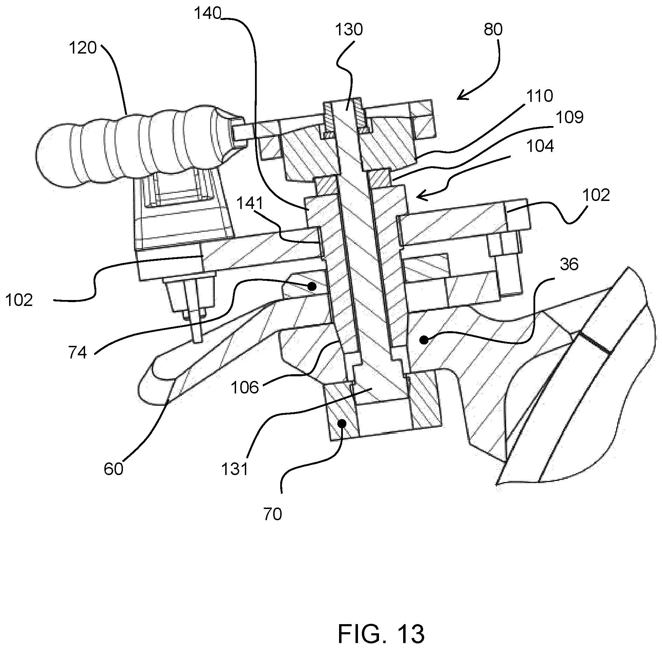

The fixings 104 have a different design to the fixings of the example above. They again comprise a shaft with a taper 106 to engage with the chamfer of the bore in the support 36. However, the fixing has inner and outer parts that are slidable relative to each other. The outer part has the chamfer, and the inner part has the thread that engages with the bore in the backplate 72. The structure shown and explained more fully with reference to FIG. 12 and FIG. 13.

The same considerations apply to the positioning and number of the edge alignment pins as discussed above for the first example, as well as the same options for right and left tool versions.

FIG. 12 shows, in cross section, the adjustment tool 80 fitted over a chopper knife 61, and shows the modified structure of the fixing 104.

The fixing 104 has a central shaft 130. The bottom of the central shaft has an enlarged portion 131. The bottom of this enlarged portion 131 has the outer thread (e.g. a conical thread) for engaging with the threaded bore of the backplate 72. The top of the central shaft is fixed to the head 110 such that rotation of the head 110 results in rotation of the central shaft 130.

An outer sleeve 140 extends around the central shaft 130. The outer sleeve is slidable along the central shaft 130. The outer sleeve 140 has the taper 106 at its end which locates in the tapered bore of the support 36 in the manner explained above. The frame 102 is screwed to the outer sleeve 140 at thread 141 so that, unlike FIG. 7, no relative movement between the outer sleeve 140 of the fixing 104 and the frame 102 is possible. However, the frame 102 and the outer sleeve 140 is slidable along the central shaft 130.

FIG. 12 shows the adjustment tool fitted but before tightening. The adjustment tool is pre-positioned with the taper 106 engaged in a chamfered bore in the support 36. The thread of the enlarged portion 131 is then in contact with the bore in the backplate 72 (but not yet screwed in). As a result, the central shaft 130 (and thereby head 110) is pushed upwards so that play P is provided. The outer sleeve 140 is in its most downward position relative to the central shaft 130 - the outer sleeve 140 is positioned against the enlarged portion 131.

When the central shaft 130 is tightened, head 110 moves downward to reduce play P until there is contact with a washer 109 below the head 110. The final rotation of the head, when in contact with the washer, creates clamping in taper 106 (as well as providing the final tightening into the threaded bore).

During tightening, the frame 102 therefore remains parallel to the support 36 (and chopper knife 61 and top plate 74) and the fixings 104 and shaft 130 are centered (due to the conical thread of the enlarged head portion 131). Canting of the frame of the adjustment tool is prevented, as the play P enables a relative movement of the shaft 130 during assembly and tightening. In particular, when tightening the fixing 104 via central shaft 130, the frame 102 can slightly move towards the knife 61 (when clamping the taper) but remains in its desired parallel state. Thus, each fixing can be fully tightened, one after the other.

FIG. 13 shows the adjustment tool after tightening. The frame 102 sits at a fixed position above the top plate 74, with the taper 106 engaged with the chamfer of the bore in the support 36. The central shaft 130 has moved down so that there is no longer the play P of FIG. 12.

This modification also has the advantage that tightening the fixings does not turn the taper 106 of the outer sleeve. This avoids locking of the tapered end in the bore. When unscrewing the fixing, the top of the enlarged portion 131 pushes against the outer sleeve 140 to separate the taper 106 of the outer sleeve 140 from the chamfer of the bore in the support 36.

This modification provides the fitting of the tapered end 106 and the screw connection as independent functions, by providing a central shaft for the screw connection and an outer sleeve with the end taper. This avoids any canting of the adjustment tool and ensures the screw connections can be made freely. The same fixing design is preferably applied to both fixings.

This disclosure also provides a method of adjusting a chopper knife of a chopper drum of a forage harvester.

For the examples above, a pair of the chopper knife bolts which mount the chopper knife to the support of the chopper drum are first removed. In the examples above, the pair is the outermost pair in a line of four bolts. However, any pair of bolts will provide a fixed position for the adjustment tool. There are four chopper knife bolts in the design shown, but there may be a different number.

The other chopper knife bolt or bolts for fixing the chopper knife to the support are loosened so that the chopper knife position can be adjusted. Of course, if fitting a new chopper knife, all of the bolts are removed to enable the new chopper knife to be fitted.

The adjustment tool is then fixed over the chopper knife using the pair of fixings, and they engage (preferably by a threaded connection) with the bores exposed by the removed chopper knife bolts.

The chopper knife position is then adjusted such that non-wearing edges butt against the set of edge alignment pins, thereby setting a position of the non-wearing edges of the chopper knife relative to the bores.

The loosened chopper knife bolt or bolts can then be tightened to fix the chopper knife in position and the adjustment tool can then be removed. The removed pair of chopper knife bolts are then replaced.

In an alternative design, as already mentioned above, there may be additional bores to those used to bolt the chopper knife, and those additional bores are provided for the purpose of attaching the tool. In this case, instead of removing a pair of the bolts, the tool is fitted, and the chopper knife bolts are all loosened. The chopper knife can then be adjusted in position before retightening the chopper knife bolts and removing the adjustment tool.

The adjustment of chopper knives is discussed above. However, the tool may also be used to fit new chopper knives, or indeed to fit the original chopper knives during assembly in the factory.

Within the scope of this application, it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

Variations to the disclosed embodiments can be understood and effected by those skilled in the art in practicing the subject matter of this disclosure, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

Any reference signs in the claims should not be construed as limiting the scope.

All references cited herein are incorporated herein in their entireties. If there is a conflict between definitions herein and in an incorporated reference, the definition herein shall control.

## Claims

1. An adjustment tool (80) for adjusting the chopping knives (61) of a chopper drum of a forage harvester, the chopper knives being attached to a support which is coupled to the chopper drum, wherein the adjustment tool comprises:
a frame (82);
a pair of fixings (84), each fixing of the pair configured to engage with a bore (50) in a chopper knife support;
a set of edge alignment pins (86) projecting from the frame for engaging with one or more non-wearing edges (64,66) of a chopper knife (61), thereby setting a position of the one or more non-wearing edges (64,66) of the chopper knife relative to the bores (50),
wherein the edge alignment pins (86) are positioned for alignment of a chopper knife (61) with a predetermined amount of wear.

2. The tool of claim 1, wherein the set of edge alignment pins (86) comprises a set of three pins, two for engaging with a back edge (64) of the chopper knife (61) opposite a cutting edge (62) of the chopper knife and one for engaging with a side edge (66) of the chopper knife.

3. The tool of any one of claims 1 to 2, wherein the set of edge alignment pins, and the fixings, are selectively attachable either opposing face of the frame (82), such that the adjustment tool is configurable for left or right side operation.

4. The tool of any one of claims 1 to 3, comprising a handle (92) mounted on the frame, wherein the handle (92) is selectively attachable to either opposing face of the frame (82), such that the adjustment tool is configurable for left or right side operation.

5. The tool of any one of claims 1 to 4, wherein one or both fixings (104) comprises a central shaft (130) configured to engage with the bore (50) in the chopper knife support and an outer sleeve (140) that carries the frame (82), wherein the outer sleeve (140) is axially slidable along the central shaft (130).

6. The tool of any one of claims 1 to 5, wherein the fixings (84) extend from one face of the frame, and manual knobs (90) for the fixings extend from the opposite face of the frame.

7. The tool of any one of claims 1 to 6, wherein the bores each comprise a bore exposed by a removed chopper knife bolt (70).

8. The tool of any one of claims 1 to 7, wherein the set of edge alignment pins (86) has at least two positions in which the edge alignment pins can be mounted to the frame (82), each associated with a different predetermined amount of wear.

9. The tool of claim 8, wherein:
the set of edge alignment pins (86) has a first position associated with a new knife and a second position associated with a 50% worn knife; or
the set of edge alignment pins (86) has a first position associated with a 25% worn knife and a second position associated with a 75% worn knife.

10. A set of adjustment tools, comprising a first tool as claimed in claim 9 for a new knife and and a 50% worn knife and a second tool as claimed in claim 9 for a 25% worn knife and for a 75% worn knife.

11. A cutting system of forage harvester, comprising:
a stationary shear bar;
a cutting drum (40) comprising an array of chopper knife assemblies (60) for rotation past the shear bar, wherein each chopper knife assembly comprises:
a set of chopper knife bolts (70);
a support (36) extending from the cutting drum (40);
a back plate (72) having a set of bores for receiving the chopper knife bolts;
a front plate (74); and
a chopper knife (61),
wherein the chopper knife (61) is clamped with the support (36) between the back plate (72) and the front plate (74) by the set of chopper knife bolts, wherein the back plate, front plate and support have circular openings for receiving the chopper knife bolts and the chopper knife (61) has a set of openings for the chopper knife bolts, to allow positioning of the chopper knife (61) relative to the support, back plate and front plate; and
a tool as claimed in any one of claims 1 to 9 for mounting over the front plate using the fixings.

12. The cutting system of claim 11, wherein the cutting drum comprises a first array of chopper knives to one lateral side and a second array of chopper knives to a second lateral side.

13. The cutting system of claim 11 or 12, wherein the bores in the support are chamfered.

14. A forage harvester comprising:
a header;
the cutting system of claim 11, 12 or 13;
an accelerator for generating a flow of the cut crop material; and
a delivery spout for receiving and conveying the cut crop material.

15. A method of adjusting a chopper knife of a chopper drum of a forage harvester, comprising:
fixing an adjustment tool over the chopper knife using a pair of fixings configured to engage with the bores of a chopper knife support through the chopper knife;
loosening the chopper knife bolts of the chopper knife to the support;
adjusting the chopper knife position such that one or more non-wearing edges butt against a set of edge alignment pins of the adjustment tool, thereby setting a position of the one or more non-wearing edges of the chopper knife relative to the bores;
tightening the loosened chopper knife bolts; and
removing the adjustment tool,
wherein the edge alignment pins are positioned for alignment of a chopper knife with a predetermined amount of wear.
